(19) Europäisches Patentamt / European Patent Office / Office européen des brevets

(11) **EP 4 764 002 A1**

(12) **EUROPEAN PATENT APPLICATION**
published in accordance with Art. 153(4) EPC

(43) Date of publication:
**24.06.2026 Bulletin 2026/26**

(21) Application number: **24854206.0**

(22) Date of filing: **13.08.2024**

(51) International Patent Classification (IPC):
***C21C 5/52*** *(2006.01)*   ***C21B 13/12*** *(2006.01)*

(52) Cooperative Patent Classification (CPC):
**C21B 13/12; C21C 5/52; Y02P 10/20**

(86) International application number:
**PCT/JP2024/028910**

(87) International publication number:
**WO 2025/037617 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023   JP 2023132679**

(71) Applicant: NIPPON STEEL CORPORATION
**Chiyoda-ku
Tokyo 100-8071 (JP)**

(72) Inventors:
• **ASAHARA, Norifumi
Tokyo 100-8071 (JP)**
• **SASAKI, Naoto
Tokyo 100-8071 (JP)**

(74) Representative: **Vossius & Partner
Patentanwälte Rechtsanwälte mbB
Siebertstraße 3
81675 München (DE)**

(54) **METHOD FOR MELTING IRON SOURCES**

(57)   Disclosed is a technique for generating slag early and promoting slag formation from an auxiliary feedstock when melting an iron source using an electric furnace. The method for melting an iron source of the present disclosure comprises a step of feeding an iron source into an electric furnace and generating an arc to melt the iron source. In the method for melting an iron source of the present disclosure, one or more first iron source and one or more second iron source are fed as the iron source. The first iron source has a content of 50.0% by mass or more of Fe and a total content of 0.4% by mass or more of Si and Al, and the second iron source has a content of 50.0% by mass or more of Fe and a total content of less than 0.4% by mass of Si and Al. In the method for melting an iron source of the present disclosure, the iron source is fed in a manner so as to satisfy $0 < (W_{A1} - W_{A2})/W_T$ ($W_{A1}$: weight (t) of the first iron source fed in first half of the step, $W_{A2}$: weight (t) of the first iron source fed in latter half of the step, and $W_T$: total weight (t) of the iron source fed in the step).

EP 4 764 002 A1

**Description**

FIELD

The present application discloses a method for melting an iron source.

BACKGROUND

Methods for melting an iron source using an electric furnace have been known. For example, PTL 1 discloses a technique in which, when melting an iron source using an electric furnace, the iron source is segregated according to composition, and actual component results during melting are compared with a required quality level while the iron source is charged into the electric furnace. PTL 2 discloses a technique in which solid reduced iron containing 3.0% by mass or more in total of $SiO_2$ and $Al_2O_3$ and 1.0% by mass or more of carbon are melted to manufacture molten steel.

CITATION LIST

PATENT LITERATURE

[PTL 1] US 4564388
[PTL 2] Japanese Unexamined Patent Publication (Kokai) No. 2021-080540

SUMMARY

TECHNICAL PROBLEM

Lengthening the arc and maintaining arc power at a high level are effective in improving the melting efficiency of an iron source in an electric furnace. However, when an arc is lengthened, the arc is in a state of not being covered by slag (i.e., open arc), and furnace wall refractory material is excessively heated by radiant heat of the arc, leading to a decrease in refractory material service life. When refractory material service life is decreased, downtime for repairs or furnace construction increases, and productivity may be impaired.
In the melting of an iron source using an electric furnace, by generating slag early and promoting slag formation from an auxiliary feedstock, an open arc does not easily occur even when the arc is lengthened. In the prior art, there has not been sufficient examination regarding early generation of slag and promotion of slag formation of auxiliary feedstock when melting an iron source using an electric furnace.

SOLUTION TO PROBLEM

The present application discloses, as a means for achieving the above object, the following plurality of aspects.

<Aspect 1>

A method for melting an iron source using an electric furnace, the method comprising

a step of feeding the iron source into the electric furnace and generating an arc within the electric furnace to melt the iron source, wherein
one or more first iron source and one or more second iron source are fed as the iron source,
the first iron source has a content of 50.0% by mass or more of Fe, and a total content of 0.4% by mass or more of Si and Al,
the second iron source has a content of 50.0% by mass or more of Fe, and a total content of less than 0.4% by mass of Si and Al, and
the iron source is fed in a manner so as to satisfy relationship (1) below:

$$0 < (W_{A1} - W_{A2})/W_T \quad (1)$$

$W_{A1}$: weight (t) of the first iron source fed in first half of the step;

first half of the step: until 50% of total weight (t) of the iron source has been fed;
$W_{A2}$: weight (t) of the first iron source fed in latter half of the step;
$W_T$: total weight (t) of the iron source fed in the step.

<Aspect 2>

The method for melting an iron source according to Aspect 1, wherein
average carbon concentration of the iron source fed in first half of the step is 0.75% by mass or more.

<Aspect 3>

The method for melting an iron source according to Aspect 1 or 2, wherein
the iron source is fed in a manner so as to satisfy relationship (1-1) below:

$$0.05 \le (W_{A1} - W_{A2})/W_T \qquad (1\text{-}1).$$

<Aspect 4>

The method for melting an iron source according to any of Aspects 1 to 3, wherein
the iron source is fed in a manner so as to satisfy relationship (2) below:

$$0.05 \le (W_{A1} + W_{A2})/W_T \le 0.95 \qquad (2).$$

ADVANTAGEOUS EFFECTS OF INVENTION

According to the method of the present disclosure, when melting an iron source using an electric furnace, slag can be generated early and slag formation from an auxiliary feedstock can be promoted. Therefore, for example, even when an arc is lengthened, an open arc does not easily occur.

DESCRIPTION OF EMBODIMENTS

Hereinafter, one embodiment of the method for melting an iron source of the present disclosure will be described. However, the method for melting an iron source of the present disclosure is not limited to the following embodiment.
The method for melting an iron source according to one embodiment is a method for melting an iron source using an electric furnace, comprising a step of feeding the iron source into the electric furnace and generating an arc within the electric furnace to melt the iron source (hereinafter, sometimes referred to as "melting step"). In the method for melting an iron source according to one embodiment, one or more first iron sources and one or more second iron sources are fed as the iron source. The first iron source has a content of 50.0% by mass or more of Fe and a total content of 0.4% by mass or more of Si and Al. The second iron source has a content of 50.0% by mass or more of Fe and a total content of less than 0.4% by mass of Si and Al. In the method for melting an iron source according to one embodiment, the iron source is fed in a manner so as to satisfy the following relationship (1):

$$0 < (W_{A1} - W_{A2})/W_T \qquad (1)$$

$W_{A1}$: weight (t) of the first iron source fed in first half of the step;
first half of the step: until 50% of total weight (t) of the iron source has been fed;
$W_{A2}$: weight (t) of the first iron source fed in latter half of the step;
$W_T$: total weight (t) of the iron source fed in the step.

1. Iron source

In the method for melting an iron source according to one embodiment, an iron source is fed into an electric furnace, and an arc is generated within the electric furnace to melt the iron source. As the iron source, one or more first iron sources and one or more second iron sources are fed.

1.1 First iron source

The first iron source is an iron source that contributes to early generation of slag and promotion of slag formation from an auxiliary feedstock. If the first iron source comprises Si and Al in a predetermined amount or more, when the first iron source is melted, the generation of $SiO_2$ and $Al_2O_3$ promotes slag formation of CaO, generating slag that serves as a basis for early foaming. According to the findings of the present inventors, such an effect is exhibited when the total content of Si and Al in the first iron source is 0.4% by mass or more. The total content of Si and Al in the first iron source may be 0.4% by mass or more and 7.0% by mass or less, 0.4% by mass or more and 4.5% by mass or less, 0.5% by mass or more and 3.0% by mass or less, 0.5% by mass or more and 2.0% by mass or less, or 0.6% by mass or more and 1.7% by mass or less. Alternatively, it is considered that the higher the total content of Si and Al in the first iron source, the greater the effect of promoting slag formation. It is preferable that the total content of Si and Al in the first iron source be 0.6% by mass or more and 7.0% by mass or less, 0.8% by mass or more and 6.0% by mass or less, or 1.0% by mass or more and 5.0% by mass or less.

The first iron source comprises a sufficient amount of Fe as an iron source. Specifically, the Fe content in the first iron source is 50.0% by mass or more. The Fe content in the first iron source may be 50.0% by mass or more and 99.6% by mass or less, 65.0% by mass or more and 99.3% by mass or less, 75.0% by mass or more and 99.0% by mass or less, 85.0% by mass or more and 98.8% by mass or less, 88.0% by mass or more and 98.5% by mass or less, or 90.0% by mass or more and 98.0% by mass or less. In the present application, the "content of Fe" for the first iron source and the second iron source refers to so-called "total Fe" (total iron content contained in iron source, including not only metallic iron but also Fe in a Fe compound).

The first iron source may comprise an additional element other than Si, Al, and Fe. For example, the first iron source may comprise carbon as an additional element. The carbon content in the first iron source, for example, may be 0% by mass or more and 15.0% by mass or less, 0.2% by mass or more and 10.0% by mass or less, 0.4% by mass or more and 7.5% by mass or less, or 0.5% by mass or more and 5.0% by mass or less. Examples of additional elements other than carbon include phosphorus, sulfur, manganese, calcium, magnesium, and oxygen.

The first iron source may be an alloy comprising Si and/or Al; and Fe, or may be a mixture of Si and/or Al; and a Fe-containing material. The Si, Al, and Fe contained in the first iron source may each be contained in the form of a pure metal or an alloy, or may each be contained in the form of a compound such as an oxide. When Si and Al are contained in the form of a compound such as an oxide, the compound is preferably in a physically or chemically integrated form with other substances contained in the first iron source. For example, the compound is preferably in a physically or chemically integrated form with an oxide, such as iron oxide or calcium oxide, contained in the first iron source. The first iron source is preferably in at least one of the following four forms. More preferably, the first iron source is one of reduced iron and pig iron or both.

Form 1: an iron source comprising an alloy of Fe with one of Si and Al or both (for example, pig iron or ferrosilicon)

Form 2: an iron source comprising pure metal or an alloy of one of Si and Al or both; and Fe (for example, a mixture of one of elemental Si and elemental Al or both; and a Fe-containing material)

Form 3: an iron source in which Fe or a Fe alloy is physically integrated with a compound comprising one of Si and Al or both (for example, reduced iron)

Form 4: an iron source in which a Fe-containing compound is physically or chemically integrated with a compound comprising one of Si and Al or both

The shape of the first iron source is not particularly limited and needs only to be a shape that allows feeding as an iron source into an electric furnace. The first iron source, for example, may be in bulk form, or may be in powder form. The first iron source may be molded.

1.2 Second iron source

The total content of Si and Al in the second iron source is relatively less than that in the first iron source above. Specifically, the second iron source, compared to the first iron source, is an iron source having a smaller effect on the early generation of slag and the promotion of slag formation from an auxiliary feedstock. Specifically, the total content of Si and Al in the second iron source is less than 0.4% by mass. The total content of Si and Al in the second iron source may be 0% by mass and less than 0.4% by mass, more than 0% by mass and less than 0.4% by mass, more than 0% by mass and 0.3% by mass or less, more than 0% by mass and 0.2% by mass or less, or more than 0% by mass and 0.1% by mass.

The second iron source comprises a sufficient amount of Fe as an iron source. Specifically, the Fe content in the second iron source is 50.0% by mass or more. The Fe content in the second iron source may be 50.0% by mass or more and 100% by mass or less, 65.0% by mass or more and 99.7% by mass or less, 75.0% by mass or more and 99.4% by mass or less, 85.0% by mass or more and 99.2% by mass or less, 88.0% by mass or more and 98.9% by mass or less, or 90.0% by mass or more and 98.4% by mass or less.

The second iron source may comprise an additional element other than Si, Al, and Fe. For example, the second iron source may comprise carbon as an additional element. The carbon content in the second iron source, for example, may be 0% by mass or more and 15.0% by mass or less, 0% by mass or more and 10.0% by mass or less, 0% by mass or more and 7.5% by mass or less, 0% by mass or more and 5.0% by mass or less, 0% by mass or more and 3.0% by mass or less, 0% by mass or more and 1.0% by mass or less, 0% by mass or more and 0.5% by mass or more and 0.5% by mass or more and 0.3% by mass or less, or 0% by mass or more and 0.1% by mass or less. Examples of additional elements other than carbon include copper, tin, zinc, chromium, titanium, niobium, vanadium, boron, phosphorus, sulfur, manganese, calcium, magnesium, and oxygen.

The second iron source is not particularly limited in the form thereof as long as the total content of Si and Al is less than 0.4% by mass. The second iron source, for example, may be scrap.

The shape of the second iron source is not particularly limited and needs only to be a shape that allows feeding as an iron source into an electric furnace. The second iron source, for example, may be in bulk form, or may be in powder form. The second iron source may be molded.

2. Relationship (1)

In the method for melting an iron source according to one embodiment, the iron source above is fed in a manner so as to satisfy the above relationship (1). Specifically, when the melting step is divided into two parts: a first half (from 0% until 50% of the total amount ($t$) of the iron source has been fed) and a latter half (from 50% until 100% of the total amount of the iron source), the amount of the first iron source fed in the first half is more than that in the latter half. By feeding a relatively large amount of the first iron source in the first half of the melting step, slag can be generated early and slag formation from an auxiliary feedstock can be promoted. Specifically, slag thickness can be ensured early in the melting step, and an open arc does not easily occur even when the arc is lengthened. By suppressing open arcs, dimensional loss of refractory material can be inhibited. In other words, from an early stage of the melting step, the arc can be lengthened and arc power can be maintained at a high level, whereby melting efficiency of the iron source can be improved.

The lower limit of the above relationship (1), $(W_{A1} - W_{A2})/W_T$, is greater than 0, and may be 0.01 or greater, 0.02 or greater, 0.03 or greater, 0.04 or greater, 0.05 or greater, 0.06 or greater, 0.07 or greater, 0.08 or greater, 0.09 or greater, or 0.1 or greater. Particularly, when the above iron source is fed in a manner so as to satisfy the following relationship (1-1):

$$0.05 \leq (W_{A1} - W_{A2})/W_T \ldots (1\text{-}1),$$

a greater effect can be expected.

In the melting of the iron source, the above first iron source tends to have a greater limitation on the amount used than the second iron source, from the viewpoint of cost. The method of the present disclosure can be said to obtain the above effects of early slag generation and promotion of slag formation from an auxiliary feedstock, by devising a manner of feeding the first iron source, the amount of which is limited in use, into the electric furnace. Specifically, according to the method of the present disclosure, the amount of the first iron source fed is relatively increased in the first half of the melting step, while the amount of the first iron source fed is relatively decreased in the latter half of the melting step, thereby allowing the above effects of early slag generation and promotion of slag formation from an auxiliary feedstock to be obtained without increasing the total amount of the first iron source fed in the melting step.

3. Other features

3.1 Feeding mode of iron source

The feeding mode of iron source in the melting step is not particularly limited. The iron source may be continuously fed into the electric furnace, or may be intermittently fed. "Continuously" means that the feeding of an iron source into the electric furnace is uninterrupted for 10 seconds or more from the start of the feeding until the end thereof. Specifically, the time between when one iron source is fed into the electric furnace and when another iron source is fed is less than 10 seconds. "Intermittently" means that the feeding of an iron source into the electric furnace is interrupted for 10 seconds or more at any time from the start of the feeding until the end thereof. The means for feeding the iron source is not particularly limited. For example, the iron source can be fed into the electric furnace via a known feeding means such as a conveyor, a chute, or a lance. The feeding rate and feeding amount of the iron source are not particularly limited, and the optimal feeding rate and feeding amount need only to be selected according to the scale of the electric furnace, etc. The first iron source and the second iron source may each be fed separately into the furnace, or may be fed in a mixture-like state. The timing and duration of feeding the first iron source and the timing and duration of feeding the second iron source need not necessarily coincide.

3.2 Carbon concentration of iron source

As described above, the first iron source and the second iron source may comprise carbon. The carbon contained in the iron source can contribute to foaming of slag, and the more carbon contained in the iron source, the more easily the thickness of the slag is increased. When the carbon concentration of the iron source fed in the first half of the melting step is high, slag thickness can be ensured earlier, and the open arc suppression effect described above is likely to be obtained. According to the findings of the present inventors, when the average carbon concentration of the iron source fed in the first half of the melting step is 0.75% by mass or more, such an effect is even more remarkable. The average carbon concentration of the iron source fed in the first half of the melting step may be 0.75% by mass or more and 5.00% by mass or less, 0.75% by mass or more and 4.00% by mass or less, 0.75% by mass or more and 3.00% by mass or less, 0.75% by mass or more and 2.75% by mass or less, or 0.75% by mass or more and 2.50% by mass or less.

3.3 Proportions of first iron source and second iron source

The proportion of the first iron source and the proportion of the second iron source in the entire iron source fed in the melting step are not particularly limited. For example, in the method for melting an iron source according to one embodiment, an iron source may be fed in a manner so as to satisfy the following relationship (2):

$$0.05 \leq (W_{A1} + W_{A2})/W_T \leq 0.95 \ldots (2).$$

Specifically, the proportion of the first iron source in the entire iron source fed in the melting step may be 5% by mass or more and 95% by mass or less, 10% by mass or more and 95% by mass or less, 10% by mass or more and 90% by mass or less, or 10% by mass or more and 85% by mass or less. When the iron source is fed in a manner so as to satisfy the relationship (2) above (i.e., when the proportion of the first iron source in the entire iron source fed in the melting step is 5% by mass or more and 95% by mass or less), the effect of promoting slag production by the first iron source is likely to be more remarkable.

3.4 Auxiliary feedstock

In the method of the present disclosure, an auxiliary feedstock may be fed into the electric furnace. The auxiliary feedstock may be fed with the above iron source, or may be fed separately from the above iron source. The auxiliary feedstock, for example, may be a Ca-containing material such as quicklime, may be a Si-containing material such as silica, or may be a combination thereof. As described above, in the melting step, in the first half thereof the first iron source is fed in a relatively large amount, and slag formation from the auxiliary feedstock is easily promoted. By promoting slag formation from the auxiliary feedstock, slag thickness can be ensured earlier, and an open arc suppression effect can be obtained earlier. In the refining step described below, an auxiliary feedstock such as a dephosphorizing agent, a desulfurizing agent, or a carbon material can be fed into the electric furnace. As a means for feeding the auxiliary feedstock, any known means such as a conveyor, a chute, or a lance can be adopted.

3.5 Injection of gas

In the method of the present disclosure, a gas may be injected into the electric furnace. For example, an oxygen-containing gas may be injected into the iron source or molten iron within the electric furnace. Although the above effects of slag generation and promotion of slag formation from an auxiliary feedstock can be obtained by atmospheric oxygen within the electric furnace alone, the effects are more remarkable when oxygen is fed into the electric furnace. Foaming of slag can also be obtained by injecting a gas. The gas injection means is not particularly limited, and needs only to be a known means such as a lance.

3.6 Carryover of slag

In the melting of an iron source using an electric furnace, a portion or all of the slag at the end of a charge (at the end of the refining step described below) may remain within the furnace and be carried over to the next charge. Such carryover slag can also contribute to ensuring the amount of slag in the first half of the melting step. According to the findings of the present inventors, when the amount of carryover slag (mass per ton of molten steel within the furnace at the end of the refining step) is 25 kg/t-steel or more, a great effect can be expected regardless of the scale of the electric furnace. When the amount of carryover slag exceeds 120 kg/t-steel, impurities such as phosphorus may concentrate in the slag and interfere with refining due to rephosphorization. The amount of carryover slag may be 25 kg/t-steel or more and 120 kg/t-steel or less, 25 kg/t-steel or more and 100 kg/t-steel or less, 25 kg/t-steel or more and 80 kg/t-steel or less, 25 kg/t-steel or more and 60 kg/t-steel or less, or 25 kg/t-steel or more and 40 kg/t-steel or less. The amount of carryover slag may be measured by a weight measuring means installed in the electric furnace, may be measured by a weight measuring means separate from the electric furnace, or may be determined by calculation from slag removal time and slag removal angle.

### 3.7 Slag removal

In the melting of the iron source using an electric furnace, slag may be appropriately removed. However, slag is preferably not removed in the first half of the melting step, in order to ensure slag thickness. It is preferable that slag be removed in the latter half of the melting step.

### 3.8 Electric furnace

The configuration of the electric furnace for melting the iron source is not particularly limited, and may have any known configuration. The electric furnace, for example, comprises a melting furnace that melts an iron source. The melting furnace is a portion that can be defined by a furnace cover, a furnace interior wall, and a furnace bottom. The shape of the melting furnace in plan view may have a circular portion. The melting furnace may have a fixed bath depth and a fixed furnace diameter. The bath depth and furnace diameter of the melting furnace are not particularly limited. The means for generating an arc in the electric furnace is also known, for example, may be a direct-current type using an upper electrode and a lower electrode, or may be an alternating-current type. In the case of a direct-current type, the upper electrode can be the anode, and the lower electrode can be the cathode. The upper electrode is mounted so as to be inserted into the furnace through the furnace cover. The lower electrode is mounted at the furnace bottom. In the case of a direct-current type, the number of each of the upper electrode and the lower electrode is at least one. The positions of the upper electrode and the lower electrode are not particularly limited.

### 4. Refining step

In one embodiment, the iron source (molten iron) melted as described above may be refined. The step of refining molten iron in an electric furnace may be the same as a conventional one. In the refining step, the temperature and composition of the molten iron are adjusted. For example, the molten iron is subjected to arc heating, and a dephosphorizing agent, a desulfurizing agent, or a carbon material is fed therein. In addition, for example, an oxygen-containing gas is injected into the molten iron, thereby controlling the temperature of the molten iron within a predetermined range and adjusting the composition of the molten iron. The molten iron after refining (molten steel) is tapped from a taphole of the electric furnace. The refining step may begin before the end of the melting step.

### 5. Effect

As described above, according to the method of the present disclosure, the amount of the first iron source fed in the first half of the step of melting an iron source using an electric furnace is relatively larger than that in the latter half, thereby allowing slag to be generated early and slag formation from an auxiliary feedstock to be promoted. Therefore, for example, an open arc does not easily occur even when the arc is lengthened, and dimensional loss of refractory material can be inhibited.

### EXAMPLES

Hereinafter, the present invention will be further described with reference to the Examples. However, the present invention is not limited to the following Examples. The present invention allows various conditions to be adopted as long as the object of the invention is achieved without departing from the spirit thereof.

### 1. Common conditions

An electric arc furnace was used to carry out the melting step and refining step of an iron source. The amount of steel tapped per charge was 110 t (65 t of residual molten metal (hot heel) from a preceding charge, furnace capacity of 175 t).

In the melting step, scrap and at least one of reduced iron and pig iron, as an iron source, were introduced from a horizontal conveyor into the electric arc furnace. The grade of each iron source is as indicated in Table 1 below. Quicklime and silica as auxiliary feedstock were continuously introduced from the top of the furnace while introducing the above iron source. An arc was generated within the electric furnace while introducing the iron source and the auxiliary feedstock to melt the iron source. During melting of the iron source, oxygen was fed into the electric furnace. The operating conditions (such as control of electrode height, amount of auxiliary feedstock introduced, and oxygen feeding conditions) other than those of the feeding of the iron source were the same in all Examples and Comparative Examples. Specifically, the electrode height was adjusted so that the arc voltage was 440 V to 540 V (in the open-arc state at the start of energization, voltage fluctuates to some extent even if residual molten metal remains from a preceding charge).

(Table 1)

|  | C (mass%) | Si (mass%) | Al (mass%) | Si + Al | Fe (mass%) | Remarks |
|---|---|---|---|---|---|---|
| Scrap | 0.02 | 0.01 | 0.01 | 0.02 | 97.1 | Second iron source |
| Reduced iron | 1.5 | 0.9 | 0.3 | 1.2 | 91.3 | First iron source |
| Pig iron | 4.5 | 0.45 | <0.01 | 0.45 | 94.5 | First iron source |

In the present Examples, a mixture of a plurality of types of scrap was used as scrap. The C content, Si content, Al content, and Fe content of the scrap indicated in Table 1 above are the average C content, average Si content, average Al content, and average Fe content in the mixture of a plurality of types of scrap.

In the refining step, oxygen was fed and a carbon material for promoting foaming was injected into the molten iron within the electric furnace to refine the molten iron. The amount of oxygen fed and the amount of carbon material injected were appropriately adjusted so that the carbon concentration in molten steel was about 0.05% by mass and the concentration of each of Si and Al was less than 0.01% by mass at the end of the refining step. The above residual molten metal from a preceding charge can be regarded as having the same composition as the molten steel at the end of the refining step of the immediately preceding charge.

2. Conditions for feeding iron source

2.1 Example A1

For the iron source, scrap as the second iron source and reduced iron as the first iron source were used. The proportion of scrap in the total iron source was set to 90% by mass. A relatively larger amount of reduced iron was fed in the first half than in the latter half of the melting step. Specifically, in the first half of the melting step, 42% by mass of scrap and 8% by mass of reduced iron were fed, and in the latter half of the melting step, 48% by mass of scrap and 2% by mass of reduced iron were fed. The iron source was continuously fed.

2.2 Comparative Example a1

For the iron source, scrap as the second iron source and reduced iron as the first iron source were used. The proportion of scrap in the total iron source was set to 90% by mass. The amount of reduced iron fed was constant between the first half and latter half of the melting step. Specifically, in the first half of the melting step, 45% by mass of scrap and 5% by mass of reduced iron were fed, and in the latter half of the melting step, 45% by mass of scrap and 5% by mass of reduced iron were fed. The iron source was continuously fed.

2.3 Example B1

For the iron source, scrap as the second iron source and reduced iron as the first iron source were used. The proportion of scrap in the total iron source was set to 60% by mass. A relatively larger amount of reduced iron was fed in the first half than in the latter half of the melting step. Specifically, in the first half of the melting step, 27% by mass of scrap and 23% by mass of reduced iron were fed, and in the latter half of the melting step, 33% by mass of scrap and 17% by mass of reduced iron were fed. The iron source was continuously fed.

2.4 Example B2

For the iron source, scrap as the second iron source and reduced iron as the first iron source were used. The proportion of scrap in the total iron source was set to 60% by mass. A relatively larger amount of reduced iron was fed in the first half than in the latter half of the melting step. Specifically, in the first half of the melting step, 25% by mass of scrap and 25% by mass of reduced iron were fed, and in the latter half of the melting step, 35% by mass of scrap and 15% by mass of reduced iron were fed. The iron source was continuously fed.

### 2.5 Comparative Example b1

For the iron source, scrap as the second iron source and reduced iron as the first iron source were used. The proportion of scrap in the total iron source was set to 60% by mass. The amount of reduced iron fed was constant between the first half and latter half of the melting step. Specifically, in the first half of the melting step, 30% by mass of scrap and 20% by mass of reduced iron were fed, and in the latter half of the melting step, 30% by mass of scrap and 20% by mass of reduced iron were fed. The iron source was continuously fed.

### 2.6 Example C1

For the iron source, scrap as the second iron source and reduced iron as the first iron source were used. The proportion of scrap in the total iron source was set to 15% by mass. A relatively larger amount of reduced iron was fed in the first half than in the latter half of the melting step. Specifically, in the first half of the melting step, 5% by mass of scrap and 45% by mass of reduced iron were fed, and in the latter half of the melting step, 10% by mass of scrap and 40% by mass of reduced iron were fed. The iron source was intermittently fed.

### 2.7 Comparative Example c1

For the iron source, scrap as the second iron source and reduced iron as the first iron source were used. The proportion of scrap in the total iron source was set to 15% by mass. A relatively larger amount of reduced iron was fed in the latter half than in the first half of the melting step. Specifically, in the first half of the melting step, 10% by mass of scrap and 40% by mass of reduced iron were fed, and in the latter half of the melting step, 5% by mass of scrap and 45% by mass of reduced iron were fed. The iron source was intermittently fed.

### 2.8 Example D1

For the iron source, scrap as the second iron source and pig iron as the first iron source were used. The proportion of scrap in the total iron source was set to 60% by mass. A relatively larger amount of pig iron was fed in the first half than in the latter half of the melting step. Specifically, in the first half of the melting step, 25% by mass of scrap and 25% by mass of pig iron were fed, and in the latter half of the melting step, 35% by mass of scrap and 15% by mass of pig iron were fed. The iron source was continuously fed.

### 2.9 Comparative Example d1

For the iron source, scrap as the second iron source and pig iron as the first iron source were used. The proportion of scrap in the total iron source was set to 60% by mass. The amount of pig iron fed was constant between the first half and latter half of the melting step. Specifically, in the first half of the melting step, 30% by mass of scrap and 20% by mass of pig iron were fed, and in the latter half of the melting step, 30% by mass of scrap and 20% by mass of pig iron were fed. The iron source was continuously fed.

### 2.10 Example E1

For the iron source, scrap as the second iron source and a mixture of reduced iron and pig iron as the first iron source were used. The blending ratio (mass ratio) of reduced iron to pig iron in the first iron source was set to 50:50. The proportion of scrap in the total iron source was set to 60% by mass. A relatively larger amount of the first iron source was fed in the first half than in the latter half of the melting step. Specifically, in the first half of the melting step, 25% by mass of scrap and 25% by mass of the first iron source were fed, and in the latter half of the melting step, 35% by mass of scrap and 15% by mass of the first iron source were fed. The iron source was continuously fed.

### 2.11 Comparative Example e1

For the iron source, scrap as the second iron source and a mixture of reduced iron and pig iron as the first iron source were used. The blending ratio (mass ratio) of reduced iron to pig iron in the first iron source was set to 50:50. The proportion of scrap in the total iron source was set to 60% by mass. The amount of the first iron source fed was constant between the first half and latter half of the melting step. Specifically, in the first half of the melting step, 30% by mass of scrap and 20% by mass of the first iron source were fed, and in the latter half of the melting step, 30% by mass of scrap and 20% by mass of the first iron source were fed. The iron source was continuously fed.

3. Evaluation method

The thickness of refractory material on the furnace wall of an electric arc furnace was measured before operation and after 100-ch operation with a laser distance measurer, and the average amount of dimensional loss per ch was determined and rated based on the following criteria. Example A1 was rated by using Comparative Example a1 as the baseline, Examples B1 and B2 by using Comparative Example b1 as the baseline, Example C1 by using Comparative Example c1 as the baseline, Example D1 by using Comparative Example d1 as the baseline, and Example E1 by using Comparative Example e1 as the baseline.

1: improved by 20% or greater from baseline
2: improved by 10% or greater and less than 20% from baseline
3: baseline

4. Evaluation results

Evaluation results are shown in Table 2 below. In Table 2 below, the "value of formula (I)" is the value determined by formula (I) below. The "average carbon concentration" is the average carbon concentration of the iron source fed in the first half of the melting step.

$$(W_{A1} - W_{A2})/W_T \ldots (I)$$

$W_{A1}$: weight (t) of the first iron source fed in the first half of the melting step
$W_{A2}$: weight (t) of the first iron source fed in the latter half of the melting step
$W_T$: total weight (t) of the iron source fed in the melting step

(Table 2)

| | Iron source blending ratio within 1 ch | | | First half of melting step | | Latter half of melting step | | Value of formula (I) | Average carbon concentration in first half of melting step (% by mass) | Refractory material wear index (rating) | Remarks |
|---|---|---|---|---|---|---|---|---|---|---|---|
| | Second iron source (% by mass) | First iron source (% by mass) | First iron source blend percentage (% by mass) | Second iron source (% by mass) | First iron source (% by mass) | Second iron source (% by mass) | First iron source (% by mass) | | | | |
| Example A1 | 90 | 10 | 10 | 42 | 8 | 48 | 2 | 0.06 | 0.26 | 2 | First iron source: reduced iron, iron source continuously fed |
| Comparative Example a1 | 90 | 10 | 10 | 45 | 5 | 45 | 5 | 0 | 0.17 | 3 | First iron source: reduced iron, iron source continuously fed |
| Example B1 | 60 | 40 | 40 | 27 | 23 | 33 | 17 | 0.06 | 0.70 | 2 | First iron source: reduced iron, iron source continuously fed |
| Example B2 | 60 | 40 | 40 | 25 | 25 | 35 | 15 | 0.10 | 0.76 | 1 | First iron source: reduced iron, iron source continuously fed |
| Comparative Example b1 | 60 | 40 | 40 | 30 | 20 | 30 | 20 | 0 | 0.61 | 3 | First iron source: reduced iron, iron source continuously fed |
| Example C1 | 15 | 85 | 85 | 5 | 45 | 10 | 40 | 0.05 | 1.35 | 2 | First iron source: reduced iron, iron source intermittently fed |
| Comparative Example c1 | 15 | 85 | 85 | 10 | 40 | 5 | 45 | -0.05 | 1.20 | 3 | First iron source: reduced iron, iron source intermittently fed |

| | Iron source blending ratio within 1 ch | | | First half of melting step | | Latter half of melting step | | Value of formula (I) | Average carbon concentration in first half of melting step (% by mass) | Refractory material wear index (rating) | Remarks |
|---|---|---|---|---|---|---|---|---|---|---|---|
| | Second iron source (% by mass) | First iron source (% by mass) | First iron source blend percentage (% by mass) | Second iron source (% by mass) | First iron source (% by mass) | Second iron source (% by mass) | First iron source (% by mass) | | | | |
| Example D1 | 60 | 40 | 40 | 25 | 25 | 35 | 15 | 0.10 | 2.26 | 2 | First iron source: pig iron, iron source continuously fed |
| Comparative Example d1 | 60 | 40 | 40 | 30 | 20 | 30 | 20 | 0 | 1.81 | 3 | First iron source: pig iron, iron source continuously fed |
| Example E1 | 60 | 40 | 40 | 25 | 25 | 35 | 15 | 0.10 | 1.54 | 2 | First iron source: reduced iron and pig iron, iron source continuously fed |
| Comparative Example e1 | 60 | 40 | 40 | 30 | 20 | 30 | 20 | 0 | 1.21 | 3 | First iron source: reduced iron and pig iron, iron source continuously fed |

EP 4 764 002 A1

As is clear from the results shown in Table 2, in the method for melting an iron source using an electric furnace, comprising a step of feeding the iron source into the electric furnace and generating an arc within the electric furnace to melt the iron source, when the following requirements (A) to (D) are satisfied (Examples A1, B1, B2, C1, D1, and E1), it can be said that wear of furnace wall refractory material can be inhibited. It is considered that by satisfying the following requirements (A) to (D), slag is generated early in the melting step and slag formation from an auxiliary feedstock can be promoted, thereby ensuring slag thickness and suppressing open arcs.

(A) As the iron source, one or more first iron sources and one or more second iron sources are fed.
(B) The first iron source has a content of 50.0% by mass or more of Fe and a total content of 0.4% by mass or more of Si and Al.
(C) The second iron source has a content of 50.0% by mass or more of Fe and a total content of less than 0.4% by mass of Si and Al.
(D) The iron source is fed in a manner so as to satisfy the following relationship (1).

$$0 < (W_{A1} - W_{A2})/W_T \ldots (1)$$

$W_{A1}$: weight (t) of the first iron source fed in the first half of the melting step
$W_{A2}$: weight (t) of the first iron source fed in the latter half of the melting step
$W_T$: total weight (t) of the iron source fed in the melting step

When the following requirement (E) is satisfied in the melting step, it can be said that a greater effect can be obtained.
(E) The average carbon concentration of the iron source fed in the first half of the melting step is 0.75% by mass or more.

5. Examination of amount of carryover of slag

5.1 Evaluation conditions

The amount of carryover slag was adjusted by adjusting slag removal time in the refining step. The blending and introduction time of the iron source was the same as in the above Example A1. The electrode height was adjusted so that the arc voltage was 440 V to 540 V (in the open-arc state initially at the start of energization, voltage fluctuates to some extent even if residual molten metal remains from a preceding charge). The arc length in this case was presumed to be 400 mm to 500 mm. A video of the furnace interior was recorded from the slag door, and a state in which light emission due to the arc was continually observed was regarded as an "open arc". The time from the start of energization until the open arc was eliminated was evaluated based on the following ratings.
1: shortened by 10% or greater from baseline
2: baseline

5.2 Evaluation results

Evaluation results are shown in Table 3 below.

(Table 3)

|  | Slag carryover amount from preceding ch (kg/t-steel) | Open arc time index (rating) |
|---|---|---|
| Level 1 | 5 | 2 |
| Level 2 | 20 | 2 |
| Level 3 | 25 | 1 |
| Level 4 | 32 | 1 |

As is clear from the results shown in Table 3, when the amount of carryover slag is 25 kg/t-steel or more, it can be said that open arcs can be more remarkably suppressed.

6. Supplemental

In the above Examples, although cases where one of reduced iron and pig iron or both were used as the first iron source were exemplified, the form of the first iron source is not limited thereto. An iron source other than reduced iron and pig iron may be used as the first iron source. In the above Examples, although cases where a mixture of a plurality of types of scrap was used as the second iron source were exemplified, the form of the second iron source is not limited thereto. One type of scrap may be used as the second iron source. Alternatively, an iron source other than scrap may be used as the second iron source.

**Claims**

1. A method for melting an iron source using an electric furnace, the method comprising

   a step of feeding the iron source into the electric furnace and generating an arc within the electric furnace to melt the iron source, wherein
   one or more first iron source and one or more second iron source are fed as the iron source,
   the first iron source has a content of 50.0% by mass or more of Fe, and a total content of 0.4% by mass or more of Si and Al,
   the second iron source has a content of 50.0% by mass or more of Fe, and a total content of less than 0.4% by mass of Si and Al, and
   the iron source is fed in a manner so as to satisfy relationship (1) below:

$$0 < (W_{A1} - W_{A2})/W_T \qquad (1)$$

   $W_{A1}$: weight (t) of the first iron source fed in first half of the step;
   first half of the step: until 50% of total weight (t) of the iron source has been fed;
   $W_{A2}$: weight (t) of the first iron source fed in latter half of the step;
   $W_T$: total weight (t) of the iron source fed in the step.

2. The method for melting an iron source according to claim 1, wherein
   average carbon concentration of the iron source fed to the first half of the step is 0.75% by mass or more.

3. The method for melting an iron source according to claim 1 or 2, wherein
   the iron source is fed in a manner so as to satisfy relationship (1-1) below:

$$0.05 \leq (W_{A1} - W_{A2})/W_T \qquad (1-1).$$

4. The method for melting an iron source according to any one of claims 1 to 3, wherein
   the iron source is fed in a manner so as to satisfy relationship (2) below:

$$0.05 \leq (W_{A1} + W_{A2})/W_T \leq 0.95 \qquad (2).$$

## INTERNATIONAL SEARCH REPORT

| | International application No. |
|---|---|
| | **PCT/JP2024/028910** |

| **A.** | **CLASSIFICATION OF SUBJECT MATTER** |
|---|---|

*C21C 5/52*(2006.01)i; *C21B 13/12*(2006.01)i
FI:  C21C5/52; C21B13/12

According to International Patent Classification (IPC) or to both national classification and IPC

| **B.** | **FIELDS SEARCHED** |
|---|---|

Minimum documentation searched (classification system followed by classification symbols)

C21C5/52; C21B13/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 101538635 A (XINJIANG BAYI IRON & STEEL CO., LTD. OF BAOSTEEL GROUP CORPORATION) 23 September 2009 (2009-09-23)<br>claims 1-4, page 3, line 4 - page 4, line 20 | 1-4 |
| Y | WO 2023/054345 A1 (NIPPON STEEL CORPORATION) 06 April 2023 (2023-04-06)<br>paragraphs [0056]-[0073], tables 1-4 | 1-4 |
| Y | WO 01/61056 A1 (UDDEHOLM TECHNOLOGY AKTIEBOLAG) 23 August 2001 (2001-08-23)<br>claims 13-14, table 1 | 1-4 |
| A | JP 2002-327211 A (NKK CORP.) 15 November 2002 (2002-11-15)<br>entire text | 1-4 |
| A | JP 11-344287 A (NKK CORP.) 14 December 1999 (1999-12-14)<br>entire text | 1-4 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/028910**

### C.    DOCUMENTS CONSIDERED TO BE RELEVANT

| Category* | Citation of document, with indication, where appropriate, of the relevant passages | Relevant to claim No. |
|---|---|---|
| A | JP 2017-190504 A (NIPPON STEEL & SUMITOMO METAL CORPORATION) 19 October 2017 (2017-10-19) <br> entire text | 1-4 |
| A | JP 2020-094247 A (NIPPON STEEL CORPORATION) 18 June 2020 (2020-06-18) <br> entire text | 1-4 |

Form PCT/ISA/210 (second sheet) (July 2022)

## INTERNATIONAL SEARCH REPORT
### Information on patent family members

International application No.

**PCT/JP2024/028910**

| Patent document cited in search report | | | Publication date (day/month/year) | Patent family member(s) | | | Publication date (day/month/year) |
|---|---|---|---|---|---|---|---|
| CN | 101538635 | A | 23 September 2009 | (Family: none) | | | |
| WO | 2023/054345 | A1 | 06 April 2023 | CN | 117858968 | A | |
| | | | | KR 10-2024-0035546 | | A | |
| WO | 01/61056 | A1 | 23 August 2001 | US | 2003/0164062 | A1 | |
| | | | | claims 13-14, table 1 | | | |
| JP | 2002-327211 | A | 15 November 2002 | (Family: none) | | | |
| JP | 11-344287 | A | 14 December 1999 | TW | 462990 | B | |
| JP | 2017-190504 | A | 19 October 2017 | (Family: none) | | | |
| JP | 2020-094247 | A | 18 June 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4564388 A

- JP 2021080540 A